## Europäisches Patentamt
## European Patent Office
## Office européen des brevets

(19)

(11) Veröffentlichungsnummer: **0 332 194**
**A2**

(12) # EUROPÄISCHE PATENTANMELDUNG

(21) Anmeldenummer: **89104209.5**

(22) Anmeldetag: **09.03.89**

(51) Int. Cl.4: **F16B 37/10 , B23G 5/04**

(30) Priorität: **10.03.88 DE 3807891**
**03.08.88 DE 3826289**

(43) Veröffentlichungstag der Anmeldung:
**13.09.89 Patentblatt 89/37**

(84) Benannte Vertragsstaaten:
**AT BE CH DE ES FR GB IT LI NL SE**

(71) Anmelder: **Wörndle, Anton**
**Föhrenweg 2**
**D-8100 Garmisch-Partenkirchen(DE)**

(72) Erfinder: **Wörndle, Anton**
**Föhrenweg 2**
**D-8100 Garmisch-Partenkirchen(DE)**

(74) Vertreter: **Flosdorff, Jürgen, Dr.**
**Alleestrasse 33**
**D-8100 Garmisch-Partenkirchen(DE)**

(54) **Schraubenmutteranordnung.**

(57) Die Schraubenmutteranordnung besteht aus einer einstückigen Außenmutter mit einem Innengewinde, dessen Innendurchmesser sich in Anzugrichtung der Schraubenmutteranordnung konisch erweitert, und aus einer aus mehreren Segmenten zusammengesetzten Innenmutter mit einem entsprechenden konischen Außengewinde. Zwischen den Innenmuttersegmenten sind Druckfedereinrichtungen angeordnet, die die Innenmuttersegmente in einem nur teilweise in die Außenmutter eingeschraubten Zustand voneinander beabstanden. In diesem Zustand ist das zylindrische Innengewinde der Innenmutter so aufgeweitet, daß die Schraubenmutteranordnung lose über ein Schraubengewinde in die Anzugposition geführt werden kann. An der in Anzugrichtung weisenden Stirnseite der Innenmutter sind vorstehende Federelemente angeordnet, die stets einen korrekten Gewindeeingriff gewährleisten, wenn die Außenmutter in der Anzugposition durch Aufschrauben die Innenmuttersegmente aneinander anlegt. Die Schraubenmutteranordnung ist auch auf einem verrosteten, verschmutzten und verbogenen Gewinde leicht in die Anzugposition zu bewegen und wieder zu lösen. Mit gehärteten Innenmuttersegmenten ist die Anordnung als Gewindeschneideanordnung einsetzbar.

Schnitt Ansicht A

FIG.8

## Schraubenmutteranordnung

Die Erfindung betrifft eine Schraubenmutteranordnung gemäß dem Oberbegriff des Anspruchs 1. Außerdem betrifft die Erfindung eine Schraubenmutteranordnung, die als Gewindeschneideanordnung einsetzbar ist.

Wenn das Gewinde einer Schraube oder einer Gewindestange verrostet, verschmutzt oder stellenweise beschädigt ist oder wenn der Gewindeabschnitt verbogen ist, bereitet das Aufschrauben einer zugehörigen Schraubenmutter erhebliche Schwierigkeiten. Eine angezogene Schraubenmutter kann aus denselben Gründen so fest sitzen, daß sie nur durch Aufbringung sehr großer Kräfte wieder lösbar ist. Bei einem langen Gewindeabschnitt einer Gewindestange kann selbst bei einem einwandfreien Zustand des Außengewindes und des Innengewindes der Mutter der Aufschraubvorgang langwierig und lästig sein, was insbesondere dann der Fall ist, wenn nur ein begrenzter Raum zur Handhabung eines Schraubenschlüssels zur Verfügung steht.

Um derartige Schwierigkeiten zu vermeiden, ist in der DE-OS 20 61 408 bereits eine Schraubenmutteranordnung der eingangs genannten Art vorgeschlagen worden. Diese Schraubenmutteranordnung hat eine einstückige Außenmutter mit einem konischen Innengewinde, in das eine aus mehreren Segmenten bestehende Innenmutter mit einem entsprechenden konischen Außengewinde eingreift. Zwischen den Innenmuttersegmenten sind in Umfangsrichtung wirkende Druckfedern angeordnet, die die Innenmuttersegmente voneinander beabstanden, wenn diese nur teilweise in die Außenmutter eingeschraubt sind, wobei in diesem Zustand das insgesamt zylindrische Innen gewinde der Innenmutter so aufgeweitet ist, daß die Schraubenmutteranordnung lose in die gewünschte Position beispielsweise auf einer Gewindestange aufgeschoben werden kann.

Wenn die bekannte Schraubenmutteranordnung auf die vorstehend beschriebene Weise in eine Anzugposition gebracht wird, in der die Innenmuttersegmente an einer Werkstückfläche anliegen, ist nicht gewährleistet, daß die Schraubenmutteranordnung wirkungsvoll angezogen werden kann. Dies ist insbesondere dann nicht der Fall, wenn bei Anlage der Innenmuttersegmente an einer nicht oder kaum verformbaren Anlagefläche, beispielsweise einer Stahlplatte, das Innengewinde der Innensegmente nicht korrekt in das Außengewinde der entsprechenden Schraube oder Gewindestange eingreift. Wenn dabei die Gewindespitzen von Außengewinde und Innengewinde aneinander anliegen, ist praktisch kein Gewindeeingriff möglich, wobei es bei einem gewaltsamen Anziehen der Schraubenmutteranordnung zwangsläufig zu einer Beschädigung des Außengewindes und/oder Innengewindes kommen muß. Wenn bei Anlage der Innenmuttersegmente an der Werkstückfläche das Innengewinde der Innenmutter nur teilweise in das gegenüberliegende Außengewinde eingreift, können die bei einem kräftigen Anziehen der Anordnung auftretenden Scherkräfte die Gewindespitzen abscheren.

Der vorliegenden Erfindung liegt die Aufgabe zugrunde, eine Schraubenmutteranordnung der eingangs genannten Art so weiter zu entwickeln, daß diese ohne Beschädigung eines mitwirkenden Gewindeabschnitts stets einwandfrei anziehbar ist. Außerdem soll eine Gewindeschneideanordnung angegeben werden, mit der mittig auf einer Stange oder Welle ohne Drehbank ein Gewinde geschnitten werden kann.

Diese Aufgabe wird erfindungsgemäß durch die im Kennzeichen der Patentansprüche 1 und 11 angegebenen Merkmale gelöst. Vorteilhafte Weiterbildungen der Erfindung sind in den abhängigen Ansprüchen gekennzeichnet.

Bei der erfindungsgemäßen Schraubenmutteranordnung steht über die in Anzugrichtung weisende Stirnfläche der Innenmutter bzw. der Innenmuttersegmente eine elastische Einrichtung vor, die in der Anzugposition der Schraubenmutteranordnung an das Werkstück, beispielsweise eine Stahlplatte, angelegt wird. Wenn in diesem Zustand die Außenmutter auf die zunächst noch durch Federkraft beabstandeten Innenmuttersegmente aufgeschraubt wird, gewährt die elastische Einrichtung zwischen dem Werkstück und der Innenmutter ein axiales Spiel, das einen korrekten Eingriff des Innengewindes der Innenmutter in das Außengewinde der Schraube oder Gewindespindel gewährleistet. Wenn in der Ausgangsposition zunächst nur ein teilweiser Gewindeeingriff erfolgt, ist die erforderliche axiale Bewegbarkeit der Innenmutter bzw. Innenmuttersegmente gegenüber dem Außengewinde der Schraube oder Gewindespindel möglich, so daß durch das Aufschrauben der Außenmutter der korrekte Gewindeeingriff automatisch hervorgerufen wird. Sollten die Gewindespitzen des Innengewindes der Innenmutter und des anliegenden Außengewindes in der Ausgangsposition aneinander anliegen, kann die Innenmutter unter Zusammendrücken der elastischen Einrichtung etwa näher an das Werkstück in eine Position angedrückt werden, in der ein korrekter Gewindeeingriff erfolgen kann. Auf diese Weise ist gewährleistet, daß die erfindungsgemäße Schraubenmutteranordnung stets angezogen werden kann, ohne daß dabei ein Gewindeabschnitt beschädigt wird.

Die erfindungsgemäße Gewindeschneideanordnung hat etwa denselben Aufbau wie die erfindungsgemäße Schraubenmutteranordnung, wobei sie jedoch nicht die elastische Einrichtung an der Stirnfläche der Innenmutter benötigt. Die Innenmuttersegmente der erfindungsgemäßen Gewindeschneideanordnung bestehen aus einem Metall großer Härte, vorzugsweise aus gehärtetem Stahl, und sind im Bereich ihres Innengewindes mit in axialer Richtung von der vorderen zur hinteren Stirnfläche durchgehenden Bohrungen zum Abführen von geschnittenen Spänen versehen. Zweckmäßigerweise befinden sich die Bohrungen im Bereich der jeweils einander zugewandten Seitenflächen der Innenmuttersegmente, indem aus jeder Seitenfläche ein halber Bohrungsquerschnitt ausgeschnitten ist. Auf diese Weise sind die Bohrungen besonders einfach herstellbar.

Mit großem Vorteil wird vorgeschlagen, daß die elastische Einrichtung der erfindungsgemäßen Schraubenmutteranordnung in wenigstens einer Nut in der Stirnfläche der Innenmutter bzw. Innenmuttersegmente gehalten ist.

Bei einer zweckmäßigen Ausgestaltung hat die Nut eine Ringform, wobei jedes Innenmuttersegment mit einem zugehörigen Ringnutabschnitt versehen ist. Die elastische Einrichtung kann aus einer der Anzahl der Innenmuttersegmente entsprechenden Anzahl von elastischen Ringsegmenten bestehen.

In einer vorteilhaften Ausgestaltung der Erfindung bestehen die elastischen Ringsegmente aus jeweils einem Rundstahlelement. Dieses Rundstahlelement kann in seinem mittleren Bereich am Boden des zugehörigen Ringnutabschnitts befestigt sein, beispielsweise durch Anschweißen oder Hartverlöten, wobei seine beiden Abschnitte im ungespannten Zustand aus dem Ringnutabschnitt vorstehen. Im angezogenen Zustand der Schraubenmutteranordnung sollten die Rundstahlelemente vollständig in die zugehörigen Nutabschnitte aufnehmbar sein.

Wenn nach einem weiteren Vorschlag der Erfindung die Enden der Rundstahlelemente scharfe Kanten aufweisen, sind die Innenmuttersegmente gegen eine unerwünschte Drehung blockiert.

Nach einem alternativen Vorschlag der Erfindung kann die elastische Einrichtung aus einem in Ringsegmente unterteilten gummiartigen Ring bestehen, der im angezogenen Zustand der Anordnung vollständig in die zugehörige Ringnut aufnehmbar sein kann. Der Ring kann beispielsweise aus Hartgummi oder aus einem elastischen Kunststoff bestehen. Diese Ausgestaltung ist insbesondere zur Befestigung von Holzbauteilen geeignet, die durch den gummiartigen Ring nicht beschädigt werden können.

Als elastische Einrichtung können auch mehrere Polster beispielsweise einer runden Grundrißform vorgesehen sein, die jeweils in einer zugehörigen Nut gehalten sind und im angezogenen Zustand vollständig in die Nuten aufnehmbar sein können. Auch Spiralfedern können über die Stirnfläche der Innenmuttersegmente vorstehen.

Mit großem Vorteil wird vorgeschlagen, daß die Außenmutter und die Innenmutter dieselbe axiale Länge haben. Wenn zudem die Abmessungen so getroffen sind, daß die Innenmuttersegmente aneinander anliegen, wenn die Innenmutter in axialer Richtung bündig in der Außenmutter sitzt, ist die Anordnung im angezogenen Zustand weitestgehend gegen Witterungseinflüsse und Verschmutzung geschützt, da weder Wasser noch Fremdpartikel in einem nennenswerten Umfang in die Anordnung eintreten können. Im angezogenen Zustand stimmt die erfindungsgemäße Anordnung in dieser Hinsicht praktisch mit einer herkömmlichen, einteiligen Schraubenmutter überein.

In den einander zugewandten Seitenflächen der Innenmuttersegmente können im wesentlichen miteinander fluchtende Bohrungen ausgebildet sein, in denen die Druckfedereinrichtungen gehalten sind. Die Druckfedereinrichtungen greifen dabei mit ihren beiden Endabschnitten in die gegenüberliegenden Bohrungen ein, wenn die Innenmuttersegmente voneinander beabstandet sind, wobei die Druckfedereinrichtungen vollständig in die Bohrungen aufgenommen werden, wenn die Innenmuttersegmente aneinander anliegen.

Im Rahmen des Erfindungsgedankens liegt auch eine alternative Ausbildung, bei der lediglich eine Bohrung in der Seitenfläche je eines Innenmuttersegments ausgebildet ist, wobei sich dann die Druckfedereinrichtung an der gegenliegenden Seitenfläche des anderen Segments abstützt und vollständig in die eine Bohrung aufgenommen werden kann.

Als Druckfedereinrichtung kommen beispielsweise Spiralfedern in Betracht, wobei jedoch auch andere elastische Druckmittel verwendbar sind, deren Federkraft so groß ist, daß stets ein sicherer Gewindeeingriff gewährleistet ist.

Nach einem weiteren vorteilhaften Vorschlag der Erfindung kann an jeweils einer Seitenfläche der Innenmuttersegmente ein Führungsstift angebracht sein, der in eine Bohrung der jeweils zugewandten Seitenfläche des benachbarten Innenmuttersegments eingreift. Durch diese Ausbildung wird zuverläsig vermieden, daß die Segmente in zueinander versetzte Gewindegänge eingreifen, was zu einer Beschädigung eines Gewindeabschnitts führen könnte. Bei der erfindungsgemäßen Gewindeschneideanordnung hätte die versetzte Positionierung der Innenmuttersegmente zur Folge, daß der Gewindeschneidevorgang fehlerhaft abläuft.

Wenn die erfindungsgemäße Anordnung mit einer Halteeinrichtung für die Innenmuttersegmente versehen ist, ist ein unbeabsichtigter, vollständiger Austritt der Innenmuttersegmente aus der Außenmutter verhindert. Die Halteeinrichtung sollte so ausgebildet sein, daß sie eine relative axiale Bewegung zwischen der Außenmutter und den Innenmuttersegmenten in einem solchen Ausmaß zuläßt, daß das Innengewinde der Innenmutter so aufgeweitet ist, daß die Anordnung lose auf ein Schraubengewinde bzw. eine Welle aufschiebbar ist. Wichtig ist, daß in dieser durch die Halteeinrichtung begrenzten Lage die Innenmuttersegmente noch sicher in das Gewinde der Außenmutter eingreifen, so daß ein einwandfreier Schraubvorgang gewährleistet ist.

Die Innenmuttersegmente können an der von der Anzugrichtung abgewandten Stirnseite der Innenmutter mit jeweils einem Begrenzungsglied versehen sein, das als stabförmiges Bauteil ausgebildet sein kann und eine zugehörige Bohrung in einem Ring lose durchgreift, wobei das freie Ende des stabförmigen Bauteils so verdickt sein sollte, daß das stabförmige Bauteil sich nicht von dem Ring lösen kann. Die Verdickung kann beispielweise durch Stauchung des Endabschnitts oder durch eine geeignete andere Maßnahme gebildet sein. Denkbar ist auch, daß das stabförmige Bauteil mit einem Gewinde versehen ist, auf das zur Befestigung an dem Ring eine Mutter aufgeschraubt ist, so daß durch Lösen dieser Muttern die Innenmuttersegmente vollständig aus der Außenmutter entnommen werden können, wenn dies einmal erforderlich sein sollte.

Der Ring, den die Begrenzungsglieder lose durchgreifen, sollte an der von der Anzugrichtung abgewandten Stirnseite der Außenmutter drehbar angeordnet sein und einen Innendurchmesser aufweisen, der kleiner als der Innendurchmesser der anliegenden Stirnseite der Außenmutter ist, damit er die Begrenzungsglieder aufnehmen kann. Selbstverständlich muß der Innendurchmesser des Ringes größer als der minimale Innendurchmesser des Innengewindes der Innenmutter sein, damit der Ring zusammen mit der übrigen Schraubenmutteranordnung lose auf das zugehörige Innenbauteil aufgeschoben und von diesem abgenommen werden kann.

Wenn der Ring nach einem weiteren Vorschlag der Erfindung in Anlage an die Stirnseite der Außenmutter gehalten ist, wobei selbstverständlich seine Drehbarkeit gewährleistet sein muß, wirkt der Ring zusätzlich als Abdichtung einem Eintritt kleiner Fremdpartikel ins Innere der Anordnung entgegen. Der Ring kann hierzu beispielsweise von Laschen übergriffen sein, die an der Stirnseite der Außenmutter befestigt sind.

Die erfindungsgemäße Schraubenmutteranordnung kann lose auf eine Schraube oder Gewindestange in eine gewünschte Anzugposition aufgeschoben werden, wenn die Innenmutter nur teilweise in die Außenmutter eingeschraubt ist, so daß der Innendurchmesser der Innenmutter aufgeweitet ist. Die Federkraft der zwischen den Segmenten wirkenden Druckfedereinrichtungen sollte dabei so eingestellt sein, daß die Außengewindeabschnitte der Innenmuttersegmente fest in das Innengewinde der Außenmutter eingreifen. Durch Aufschrauben der Außenmutter auf die aus den Innenmuttersegmenten zusammengesetzte Innenmutter werden diese infolge der Konusform der ineinander eingreifenden Gewinde aufeinander zu bewegt, bis der Innendurchmesser des zylindrischen Innengewindes entsprechend verengt ist. In gleicher Weise wird die erfindungsgemäße Gewindeschneideanordnung gehandhabt, um mittig auf einer Welle ohne Zuhilfenahme einer Drehbank ein Gewinde zu schneiden.

Wenn die Anordnung von einem verrosteten, verschmutzten oder verbogenen Schraubengewinde oder von der Welle gelöst werden soll, wird zunächst die Außenmutter von der Innenmutter soweit abgeschraubt, bis der Innendurchmesser der Innenmutter unter Mitwirkung der Druckfedereinrichtungen so aufgeweitet ist, daß die gesamte Anordnung anschließend über das Schraubengewinde bzw. die Welle gleiten kann.

Wenn jedoch die Anordnung von einem einwandfreien Gewinde losgedreht wird, kann die Innenmutter bündig innerhalb der Außenmutter verbleiben. Um bei einer späterenVerwendung der erfindungsgemäßen Anordnung den Innendurchmesser aufweiten zu können, wird mit besonderem Vorteil vorgeschlagen, in der der Anzugrichtung zugewandten Stirn seite der Innenmutter gegenüberliegende Bohrungen auszubilden, in die ein Drahtbügel zum Herausschrauben der Innenmutter aus der Außenmutter einsetzbar ist. Ein derartiger Drahtbügel ist ein besonders einfaches Werkzeug, das an Ort und Stelle aus einem Stück Draht zurecht gebogen werden kann, so daß die erfindungsgemäße Anordnung in einem solchen Fall schnell und einfach in einen Zustand versetzt werden kann, in dem der Innendurchmesser aufgeweitet ist.

Der Innendurchmesser der Innenmutter ist mit wenigen Umdrehungen aufzuweiten, so daß dieser Vorgang schnell und bequem ausführbar ist. Bei einem eingängigen Gewinde sind vom lockeren zum festen Sitz etwa 2,5 Umdrehungen erforderlich, wobei dies mit etwa 1,25 Umdrehungen erreicht wird, wenn nach einem weiteren Vorschlag der Erfindung ein zweigängiges Gewinde verwendet wird.

Die erfindungsgemäße Anordnung hat insgesamte eine hohe Festigkeit, die im wesentlichen der Festigkeit einer einteiligen Schraubenmutter entspricht, da ihre für die Festigkeit maßgeblichen Bestandteile nicht aus Materialien geringerer Festigkeitseigenschaften, wie z.B. Kunststoff, bestehen.

Die Verwendung der erfindungsgemäßen Anordnung ist nicht auf große Gewindedurchmesser beschränkt, vielmehr ist die erfindungsgemäße Anordnung für jeden Gewindedurchmesser, auch für kleine Durchmesser, geeignet.

Weitere Einzelheiten der Erfindung ergeben sich aus der nachfolgenden Beschreibung einer bevorzugten Ausführungsform sowie anhand der Zeichnung.Dabei zeigen auf rein schematische Weise:

Fig. 1 eine Aufsicht auf die der Anzugsrichtung entgegengesetzte Stirnfläche eines Innenmuttersegments;

Fig. 2 eine Seitenansicht des Innemuttersegments in Fig. 1;

Fig. 3 eine Aufsicht auf eine aus vier Innenmuttersegmenten gemäß Figuren 1 und 2 zusammengesetzte Innenmutter, wobeidie Innenmuttersegmente aneinander anliegen;

Fig 4 eine Seitenansicht der Innenmutter gemäß Fig. 3;

Fig 5 eine Ansicht der der Anzugrichtung entgegengesetzten Stirnfläche der Außenmutter;

Fig 6 eine Seitenansicht der Außenmutter gemäß Fig. 5;

Fig 7 eine Aufsicht auf die der Anzugrichtung entgegengesetzte Stirnfläche der zusammengesetzten Anordnung mit voneinander beabstandeten Innensegmente, die teilweise in die Außenmutter eingeschraubt sind;

Fig 8 eine teilweise geschnittene Seitenansicht der Anordnung gemäß Fig. 7;

Fig. 9 eine Schemadarstellung einer Innenmutter ohne elastische Einrichtung in der Anzugposition;

Fig. 10 eine Schemadarstellung einer erfindungsgemäßen Innenmutter mit elastischer Einrichtung in der Anzugposition und

Fig. 11 die Innenmutter gemäß Fig. 10 in dem angezogenen Zustand.

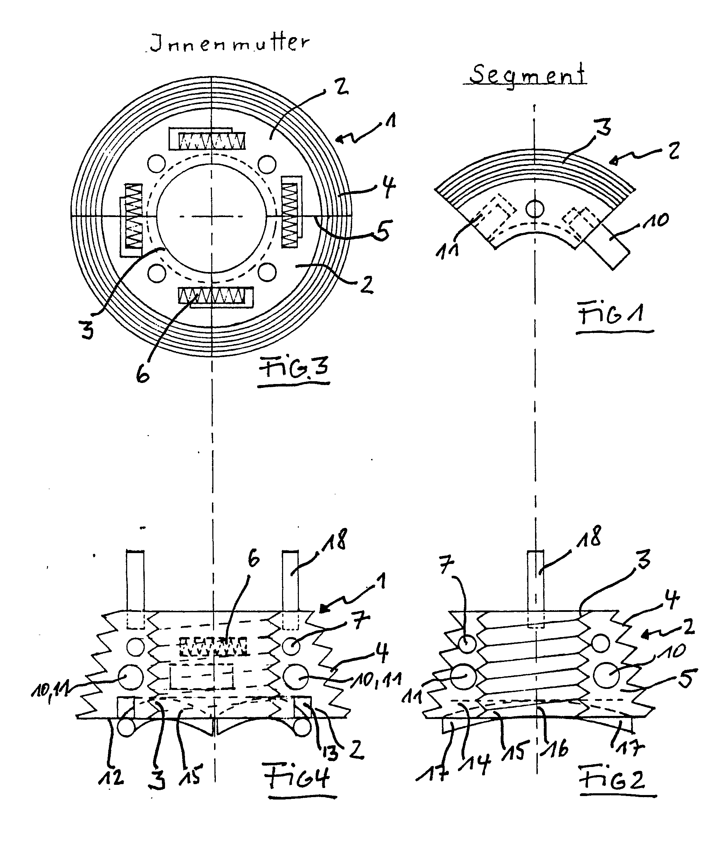

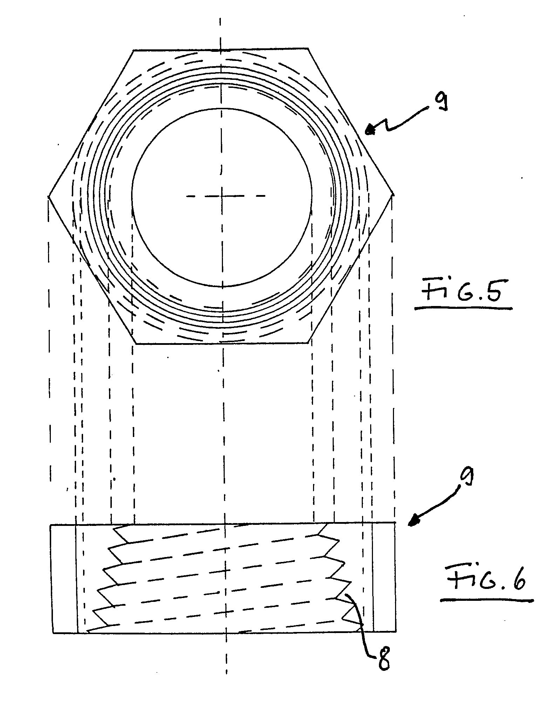

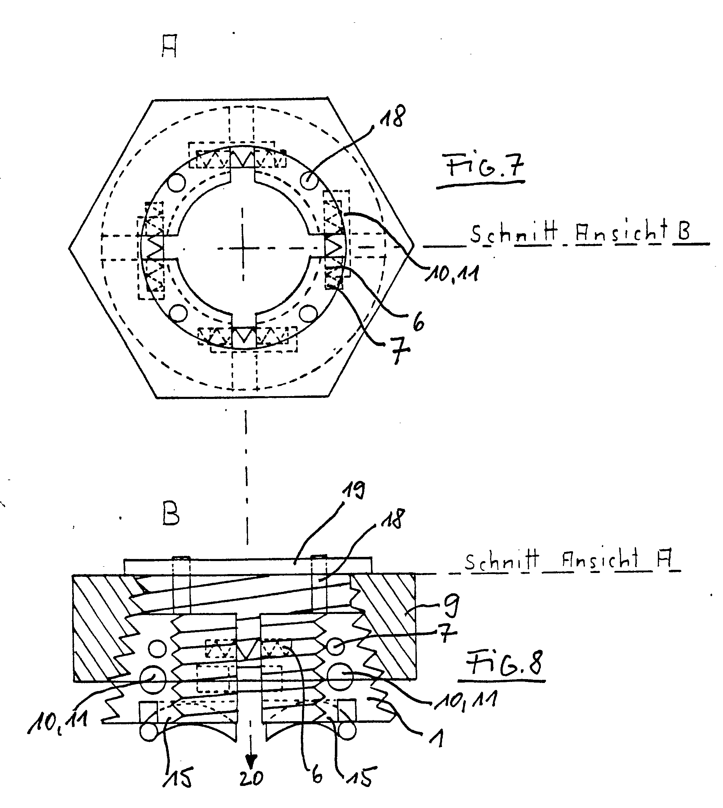

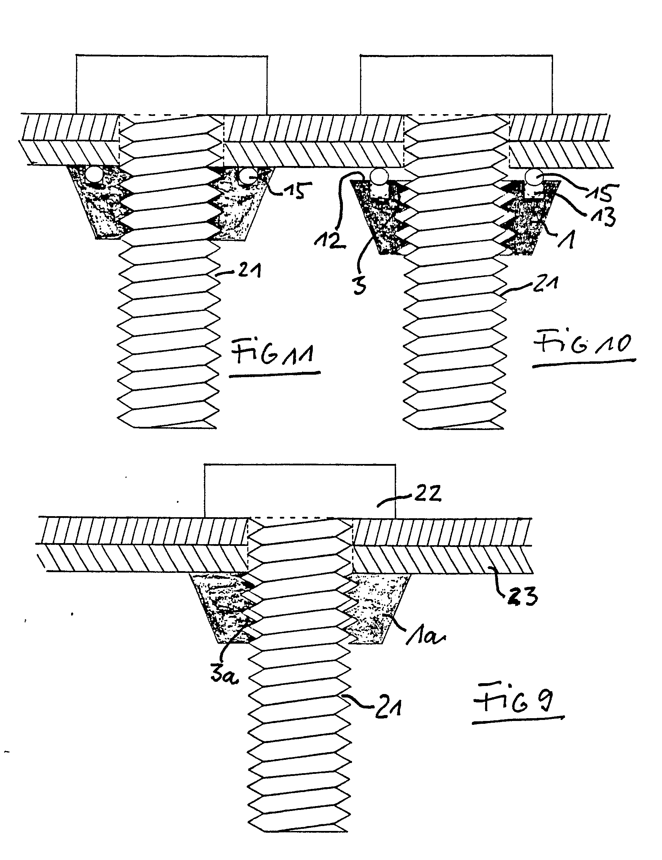

Die in den Figuren 3 und 4 dargestellte Innenmutter 1 besteht aus vier Innenmuttersegmenten 2, die insgesamt ein zylindrisches Innengewinde 3 und ein konisch sich erweiterndes Außengewinde 4 aufweisen. Die Innenmutter 1 ist in den Figuren 3 und 4 so dargestellt, daß die Seitenflächen 5 der Innenmuttersegmente 2 aneinander anliegen, obwohl zwischen den Innenmuttersegmenten Schraubenfedern 6 wirken, die in Bohrungen 7 eingreifen, die in den Seitenflächen 5 der Innenmuttersegmente 2 miteinander fluchtend ausgebildet sind. Die Schraubenfedern 6 stellen sicher, daß in einem nur teilweise eingeschraubten Zustand der Innenmutter 1 deren konisches Außengewinde 4 korrekt in ein konisches Innengewinde 8 (Fig. 6) der zugehörigen Außenmutter 9 eingreift.

Wie insbesondere Fig. 1 zeigt, ist jeweils eine Seitenfläche 5 eines Innenmuttersegments 2 mit einem vorstehenden Führungsstift 10 versehen, der in eine damit fluchtende Bohrung 11 der anliegenden Seitenfläche 5 des benachbarten Innenmuttersegments 2 eingreift, damit kein Innenmuttersegment 2 einen Gewindegang eines nicht dargestellten Ge windes überspringen kann, auf das die Anordnung aufgeschraubt wird.

In der in Anzugrichtung liegenden Stirnfläche 12 der Innenmutter 1 bzw. Innenmuttersegmente 2 ist eine kreisringförmige Nut 13 ausgebildet. In jedem Nutabschnitt 14 eines jeden Innenmuttersegments 2 ist ein Federelement 15 befestigt, das aus einem Rundstahl besteht und in der Mitte 16 des Nutabschnitts 14 am Nutboden angeschweißt ist. Die beiden seitlichen Endabschnitte 17 des Federelements 15 stehen im ungespannten Zustand des Federelementes über die Stirnfläche 12 hinaus vor. Die Funktion der vier Federelemente 15 wird weiter unten im Zusammenhang mit denFiguren 9 bis 11 näher erläutert.

An der der Anzugrichtung abgewandten Stirnfläche ist jedes Innenmuttersegment mit einem rein schematisch dargestellten stabförmigen Bauteil 18 verbunden, dessenFunktion nachfolgend im Zusammenhang mit Fig. 8 beschrieben wird.

Fig. 8 zeigt einen Zustand, in dem die Innenmutter 1 teilweise in die Außenmutter 9 eingeschraubt wird, und zwar ist der minimale Eingriff der Innenmutter 1 dargestellt, der durch die Länge der stabförmigen Bauteile 18 begrenzt ist, die einen Haltering 19 lose durchgreifen, der drehbar an der der Anzugrichtung 20 abgewandten Stirnfläche der Außenmutter 9 anliegt. Die stabförmigen Bauteile 18 haben einen verdickten Kopf, der ein Lösen der Bauteile 18 von dem Ring 19 verhindert.

Fig. 9 zeigt schematisch eine Innenmutter 1a, die auf dem Gewinde 21 einer Schraube 22 zur Befestigung eines Werkstücks 23 in die Anzugposition aufgeschoben ist, in der nun noch die nicht dargestellte Außenmutter anzuziehen ist, um die Innenmuttersegmente mit ihren Seitenflächen aneinander anzulegen und den Innendurchmesser des Innengewindes entsprechend zu verkleinern. Wenn in dem in Figur 9 dargestellten Zustand die nicht dargestellte Außenmutter auf die Innenmuttersegmente aufgeschraubt wird, kann dann , wenn das Werkstück 23 aus einem nicht verformbaren Material besteht, kein korrekter Eingriff des Innengewindes 3a in das Schraubengewinde 21 zustande kommen, sondern der Gewindeeingriff erfolgt lediglich teilweise, wie dies in Figur 9 dargestellt ist. In einem solchen Falle können die Gewinde leicht beschädigt werden.

Wenn jedoch, wie die Figuren 10 und 11 zeigen, die Innenmutter 1 gemäß der Erfindung mit ihrem über die Anlagefläche 12 hervorstehenden Federelement 15 an das Werkstück 23 angelegt wird, erfolgt beim Aufschrauben der nicht dargestellten Außenmutter zuverlässig und zwangsläufig ein korrekter Gewindeeingriff zwischen dem Innengewinde 3 und dem Außengewinde 21, da die Federelemente 15 das hierzu erforderliche axiale Spiel gewähren. In der in Fig. 11 dargestellten Anzugposition sind die Federelemente 15 vollständig in die zugehörige Nut 13 aufgenommen.

**Ansprüche**

1. Schraubenmutteranordnung mit einer einstückigen Außenmutter mit einem Innengewinde, dessen Innendurchmesser in Anzugrichtung der Schraubenmutteranordnung sich konisch erweitert, und einer mit einem zylindrischen Innengewinde versehenen Innenmutter mit einem entsprechenden, sich in der Anzugrichtung ebenso konisch erweiternden Außengewinde, das in das Innengewinde der Außenmutter eingreift, wobei die Innenmutter in Umfangsrichtung aus mehreren Innenmuttersegmenten mit entsprechenden Innen- und Außengewindeabschnitten zusammengesetzt ist und zwischen den Innenmuttersegmenten in Umfangsrichtung wirkende Druckfedereinrichtungen angeordnet sind, die die Innenmuttersegmente in einem teilweise in die Außenmutter eingeschraubten Zustand der Innenmutter voneinander beabstanden,
**dadurch gekennzeichnet,**
daß im nicht angezogenen Zustand der Anordnung eine über die in Anzugrichtung (20) weisende Stirnfläche (12) der Innenmutter (1) vorstehende elastische Einrichtung (15) angeordnet ist.

2. Anordnung nach Anspruch 1,
dadurch gekennzeichnet, daß die elastische Einrichtung (15) in wenigstens einer Nut (13) in der Stirnfläche (12) gehalten ist.

3. Anordnung nach Anspruch 1 oder 2,
dadurch gekennzeichnet, daß die elastische Einrichtung aus einer der Anzahl der Innenmuttersegmente (2) entsprechenden Anzahl von elastischen Ringsegmenten (15) besteht, wobei jedes elastische Ringsegment (15) in einem zugehörigen Ringnutabschnitt (14) eines Innenmuttersegments (2) angeordnet ist.

4. Anordnung nach einem der Ansprüche 1 bis 3,
dadurch gekennzeichnet, daß die elastische Einrichtung (15) im angezogenen Zustand der Anordnung vollständig in die zugehörigen Ringnutabschnitte (14) aufnehmbar sind.

5. Gewindeschneideanordnung,
dadurch gekennzeichnet, daß eine einstückige Außenmutter (9) ein Innengewinde (8) aufweist, dessen Innendurchmesser in Anzugsrichtung (20) der Gewindeschneideanordnung sich konisch erweitert, daß eine Innenmutter (1) mit einem entsprechenden, sich in der Anzugsrichtung ebenso konisch erweiternden Außengewinde (4) in das Innengewinde (8) der Außenmutter eingreift und ein zylindrisches Innengewinde aufweist, das die Innenmutter (1) in Umfangsrichtung aus mehreren Innenmuttersegmenten (2) mit entsprechenden Innen- und Außengewindeabschnitten zusammengesetzt sind, daß zwischen den Innen muttersegmenten (2) in Umfangsrichtung wirkende Druckfedereinrichtungen (6) angeordnet sind, die die Innenmuttersegmente in einem teilweise in die Außenmutter eingeschraubten Zustand der Innenmutter voneinander beabstanden, daß die Innenmuttersegmente (2) aneinander liegen, wenn die Außenmutter vollständig auf die Innenmutter aufgeschraubt ist, daß die Innenmuttersegmente (2) aus einem Metall großer Härte, vorzugsweise gehärtetem Stahl bestehen, und daß die Innenmuttersegmente im Bereich ihres Innengewindes mit in axialer Richtung durchgehenden Bohrungen zum Abführen von geschnittenen Spänen versehen sind.

6. Anordnung nach einem der Ansprüche 1 bis 5,
dadurch gekennzeichnet, daß die Außenmutter (9) und die Innenmutter (1) dieselbe axiale Länge aufweisen und daß die Innenmuttersegmente (2) aneinander anliegen, wenn die Innenmutter (1) in axialer Richtung bündig in der Außenmutter (9) sitzt.

7. Anordnung nach einem der Ansprüche 1 bis 6,
dadurch gekennzeichnet, daß in den einander zugewandten Seitenflächen (5) der Innenmuttersegmente (2) miteinander fluchtende Bohrungen (7) ausgebildet sind, in denen die Druckfedereinrichtung (6) gehalten sind, und daß an jeweils einer Seitenfläche (5) der Innenmuttersegmente (2) ein Führungsstift (10) angebracht ist, der in eine Bohrung (11) der jeweils zugewandten Seitenfläche (5) des benachbarten Innenmuttersegments eingreift.

8. Anordnung nach einem der Ansprüche 1 bis 7,
dadurch gekennzeichnet, daß die Innenmuttersegmente (2) an der von der Anzugsrichtung (20) abgewandten Stirnseite der Innenmutter (1) mit jeweils einem Begrenzungsglied (18) verbunden sind, daß das Begrenzungsglied ein stabförmiges Bauteil (18) ist, das eine zugehörige Bohrung in einem Ring (19) lose durchgreift und dessen freier Endabschnitt einen größeren Durchmesser als die Bohrung aufweist, und daß der Ring (19) an der von der Anzugsrichtung (20) abgewandten Stirnseite der Außenmutter (9) drehbar angeordnet ist und einen Innendurchmesser aufweist, der kleiner als der Innendurchmesser der anliegenden Stirnseite der Außenmutter (9) und größer als der minimale Innendurchmesser des Innengewindes (3) der Innenmutter (1) ist, so daß der Ring das lose Aufschieben der Anordnung auf ein zugehöriges Schraubengewinde bzw. eine Welle zuläßt.

9. Anordnung nach einem der Ansprüche 1 bis 8,
dadurch gekennzeichnet, daß der Ring (19) in Anlage an die Stirnseite der Außenmutter (9) gehalten ist.

10. Anordnung nacheinem der Ansprüche 1 bis 9,
dadurch gekennzeichnet, daß in der der Anzugsrichtung (20) zugewandten Stirnseite (12) der Innenmutter (1) gegenüberliegende Bohrungen ausgebildet sind, in die ein Drahtbügel zum Herausschrauben der Innenmutter (1) aus der Außenmutter (9) einsetzbar ist.

Innenmutter

Segment

FIG.3

FIG.1

FIG.4

FIG.2

FiG.5

FiG.6

A

18

FiG.7

Schnitt Ansicht B

10,11

6

7

B

19

18

Schnitt Ansicht A

9

7

FiG.8

10,11

10,11

1

15    20    6    15

15

15
13
1

12

3

21

21

FiG 11

FiG 10

22

23

1a

3a

21

FiG 9